Europäisches Patentamt

European Patent Office

Office européen des brevets

(11) Numéro de publication: **0 410 918 A1**

## DEMANDE DE BREVET EUROPEEN

(21) Numéro de dépôt: 90460027.7

(22) Date de dépôt: **26.07.90**

(51) Int. Cl.5: **A01K 87/06, F16B 2/08**

(30) Priorité: **28.07.89 FR 8910456**

(43) Date de publication de la demande:
**30.01.91 Bulletin 91/05**

(84) Etats contractants désignés:
**DE ES GB IT**

(71) Demandeur: **MITCHELL SPORTS S.A.**
**30, rue de Messy**
**F-74300 Cluses(FR)**

(72) Inventeur: **Bernard, Jean**
**134, avenue des Lacs, Scionzier**
**F-74300 Cluses(FR)**
Inventeur: **L'Host, Pierre**
**Le Martelet, Chatillon/Cluses**
**F-74300 Cluses(FR)**
Inventeur: **Plestan, Alain**
**Résidence Le Bettex, 108, Clos des Ducs de Savoie**
**F-74700 Sallanches(FR)**

(74) Mandataire: **Schrimpf, Robert et al**
**Cabinet Regimbeau 11, rue Franz Heller,**
**Centre d'Affaires Patton, B.P. 19107**
**F-35019 Rennes Cédex(FR)**

(54) **Dispositif pour fixer, de manière ajustable, un accessoire tel qu'un moulinet sur une canne à pêche.**

(57) Ce dispositif comprend une paire de manchons souples et fendus (1a, 1b) apte à envelopper partiellement la canne (C), qui possède un logement (20a, 20b) pour la retenue de l'accessoire (P), ainsi que des moyens serreurs consistant en une plaquette arquée rigide (3a, 3b) adaptée pour mettre sous tension le manchon associé de façon à le bloquer par friction, en même temps que l'accessoire, sur la canne.

Matériel pour la pêche.

EP 0 410 918 A1

## DISPOSITIF POUR FIXER, DE MANIERE AJUSTABLE, UN ACCESSOIRE TEL QU'UN MOULINET SUR UNE CANNE A PECHE

La présente invention concerne un dispositif qui sert à fixer, avec possibilité d'ajustement longitudinal, un accessoire sur une canne à pêche ; cet accessoire peut être en particulier un moulinet ou un anneau de guidage de ligne.

Il est très souhaitable de pouvoir ajuster la position de ce genre d'accessoire, et notamment du moulinet, sur la canne à pêche, soit pour optimiser l'équilibrage de l'ensemble canne-moulinet, ce qui est important pour la pêche au lancer, soit pour adapter l'équipement à un certain type de pêche, soit encore pour tenir compte de la morphologie ou des habitudes du pêcheur.

Bien entendu, la sodidarisation entre la canne et l'accessoire doit être parfaitement efficace, c'est-à-dire dépourvue de jeux et durable ; les moyens de fixation ne doivent pas en outre nuire au confort de prise en main par le pêcheur de la canne et du pied de moulinet.

Les dispositifs traditionnels de fixation d'un moulinet sur une canne consistent en une paire de bagues lisses emmanchées avec jeu sur la canne. Chaque bague présente un logement pour l'extrémité de la branche supérieure du pied de moulinet, pied qui a la forme générale d'un "T" ; l'ajustage en translation se fait très facilement , le blocage étant réalisé par effet de coin entre les branches légèrement coniques du pied de moulinet et les logements de forme complémentaire prévus dans les bagues. L'inconvénient majeur de ce système de fixation traditionnel est sa manque de tenue dans le temps, les déréglages intempestifs étant fréquents. En outre le confort de prise en main est médiocre en raison des saillies que représentent les bagues.

On connait par ailleurs, par le document FR-A-2 602 952, un dispositif de montage du moulinet qui comprend une paire de bagues de retenue composées de deux parties légèrement excentrées pouvant tourner l'une par rapport à l'autre. Le serrage des bagues sur la canne se fait par friction, lorsque les deux parties se trouvent en position angulairement décalée. Un tel dispositif permet un ajustement aisé du moulinet sur la canne et assure une fixation efficace du moulinet. Il présente toutefois l'inconvénient de ne pas convenir pour les cannes coniques et de ne s'adapter qu'à un diamètre bien déterminé de canne. Il est donc nécessaire de disposer d'un modèle pour chaque diamètre, ce qui entraîne bien sûr des investissements importants à la fabrication et cause des difficultés pour la gestion des stocks, tant pour le fabricant que pour le détaillant. Il faut savoir en effet qu'il existe un grand nombre de diamètres pour les cannes usuelles du marché, ces diamètres étant compris dans une fourchette large, de 20 à 36 mm environ.

Le dispositif selon GB-A-2 059 732 comprend une paire de manchons de forme générale cylindrique s'emmanchant sur la canne et présentant chacun un logement apte à recevoir l'une des deux branches du pied de moulinet. L'un des manchons est réalisé dans une matière plastique rigide et l'autre dans une matière plastique souple. Pour la fixation du moulinet, on repousse ce dernier à force, tout en le faisant tourner sur lui-même pour obtenir un effet de vissage, sur la branche du pied de moulinet qui lui est associée ; cette branche ayant une section longitudinale sensiblement triangulaire, le manchon souple se trouve donc progressivement mis sous tension (par effet de coin), ce qui réalise la fixation par friction de ce manchon et, corrélativement du moulinet, sur la canne.

Toutefois, un tel dispositif est difficile à utiliser et le serrage obtenu, qui dépend de la force et de l'habilité de l'usager, est relativement aléatoire. En outre, comme pour le dispositif précédent, il ne peut s'adapter qu'à un diamètre bien déterminé de canne.

La présente invention a pour but de résoudre ces différents problèmes en proposant un dispositif du genre évoqué qui soit peu coûteux, facile à utiliser, qui assure une fixation efficace et durable, qui s'adapte à des diamètres de canne très différents, tout en ne nuisant pas, ou nuisant peu, au confort de prise en main de la canne et du pied de moulinet.

Ces différents résultats sont obtenus, conformément à l'invention, grâce au fait que le dispositif est du type comprenant une paire de manchons enveloppant partiellement la canne et possèdant chacun un logement conformé pour recevoir l'une des deux branches du pied (en forme de "T") de l'accessoire et, d'une part, que ces manchons sont des manchons souples et fendus, et, d'autre part, qu'à chaque manchon sont associés des moyens serreurs adaptés pour mettre sous tension le manchon de façon à le bloquer par friction, en même temps que l'accessoire, sur la canne, ces moyens serreurs consistant en une plaquette arquée rigide apte à relier les deux bords du manchon fendu en resserrant celui-ci sur la canne.

Par ailleurs, selon un certain nombre de caractéristiques avantageuses, mais non limitatives, de l'invention :
- la plaquette arquée et le manchon fendu possèdent des profils d'emboîtement mutuel qui consistent en des séries de rainures sensiblement longitudinales formées dans l'une des pièces, aptes à coopérer sélectivement avec une paire de nervures prévues sur l'autre pièce, la mise en place de la plaquette sur le manchon se faisant par translation en direction axiale ;

- ces nervures sont constituées par les deux bords latéraux rabattus et parallèles de la plaquette arquée, tandis que lesdites rainures sont légèrement inclinées par rapport à la direction axiale, d'un angle de l'ordre de 1 à 3° ;

- les rainures et les nervures ont des profils en contre-dépouille, par exemple en queue d'aronde, aptes à empêcher la désolidarisation inopinée de la plaquette et du manchon à l'état non serré ;

- il est prévu des moyens d'arrêt en translation de la plaquette sur le manchon.

D'autres caractéristiques et avantages de l'invention apparaîtront de la description et des dessins annexés qui en présentent des modes de réalisation préférentiels.

Sur ces dessins :

- la figure 1 est une vue éclatée en pespective d'un ensemble de deux dispositifs identiques de fixation qui font l'objet d'un premier mode de réalisation, et d'une partie du pied d'accessoire (moulinet) ;

- la figure 2 est une vue de côté schématique des mêmes dispositifs à l'état serré ;

- la figure 3 est une vue en coupe longitudinale, selon le plan III-III de la figure 4, du manchon fendu constitutif du premier mode de réalisation ;

- la figure 4 est une vue de dessus schématique du manchon de la figure 3, destinée à montrer l'inclinaison des rainures ;

- les figures 5 et 6 sont des vues en coupe transversale destinées à illustrer le mode de serrage du dispositif sur deux cannes de diamètres différents ;

- la figure 7 est une vue de dessous, à plus petite échelle, de la plaquette constitutive du dispositif ;

- la figure 8 est une vue de détail à plus grande échelle, en coupe transversale selon le plan VIII-VIII de la figure 9, destinée à montrer la liaison entre la plaquette et le manchon ;

- la figure 9 est une vue en coupe longitudinale selon le plan IX-IX de la figure 8 ;

- les figures 10 et 11 représentent un second mode de réalisation du dispositif, vu en coupe transversale, respectivement avant et après fixation sur une canne ;

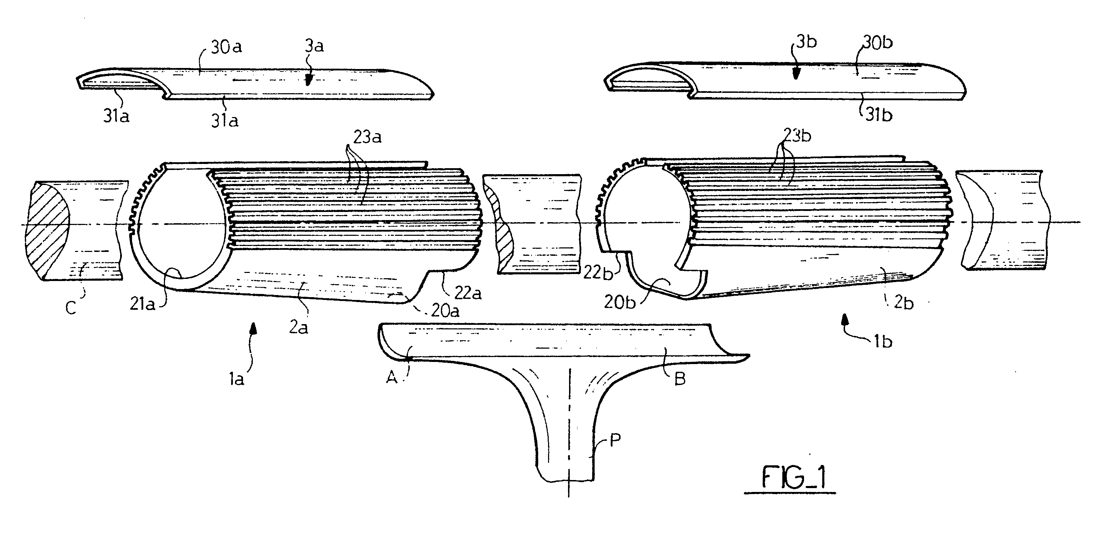

Sur la vue éclatée de la figure 1, on a désigné par la référence P le pied de montage d'un moulinet (non représenté). De manière connue, ce pied a la forme d'un "T" dont la barrette supérieure a une face incurvée concave, destinée à épouser la paroi de la canne à pêche C . On a désigné par les références A et B chacune des branches de cette barrette ; leur face inférieure est légèrement inclinée et présente donc une certaine conicité autorisant le blocage par effet de coin au moyen de bagues de fixation traditionnelles comme cela a été mentionné plus haut.

Il est prévu pour la fixation du pied P deux dispositifs identiques dont les références de l'un ont reçu l'indice a et celle de l'autre la référence b ; chacun de ces dispositifs est destiné à assurer la retenue de l'une des deux branches A respectivement B .

Le dispositif, généralement désigné par la référence 1, est composé de deux pièces, à savoir un manchon fendu souple 2 et une plaquette de liaison rigide 3.

Le manchon 2 est réalisé par exemple en polyuréthane ; la paroi interne 21 du manchon est de forme générale circulaire, de diamètre (au repos) D sensiblement égal au diamètre moyen d'une canne, c'est-à-dire au diamètre correspondant au milieu de la fourchette des diamètres auquel le dispositif est destiné. A l'une des extrémité du manchon, en un emplacement diamétralement opposé à celui de la fente, est prévu un logement 20 conformé pour recevoir la branche A ou B du pied de moulinet. A cette extrémité est prévue une découpe 22 autorisant le passage de la partie centrale du pied P .

Dans la paroi extérieure du manchon, de part et d'autre de la fente, sont ménagées deux séries de rainures 23 qui s'étendent sensiblement en direction longitudinale du manchon (suivant les génératrices).

En fait, comme on le voit sur la vue schématique de la figure 4, les rainures sont très légèrement inclinées par rapport à l'axe longitudinal, d'un angle u qui est de préférence de l'ordre de 1 à 3°. Cet angle est tel que les rainures des deux séries divergent en direction de l'extrémité du manchon muni du logement 20 de retenue du pied P .

La plaquette 3 est une plaquette rigide de faible épaisseur, par exemple en acier inoxydable ou en matière plastique rigide ; cette plaquette 3 possède une partie principale qui en vue de dessus possède une forme généralement rectangulaire, de longueur correspondant à celle du manchon 2 ; la partie 30 est cintrée selon un arc de cylindre dont le rayon correspond sensiblement à celui du manchon ; les deux bords de la plaquette sont rabattus en direction radiale de manière à former des nervures parallèles 31. La section de ces nervures est complémentaire de celle des rainures 23.

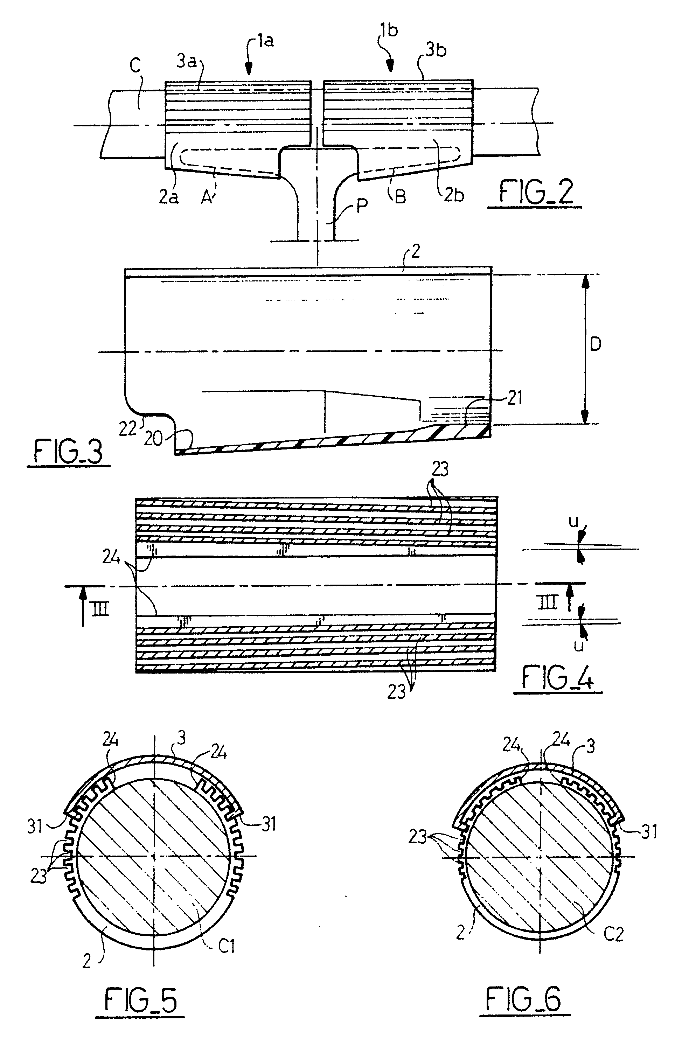

Pour fixer le moulinet sur la canne, on commence par faire glisser deux manchons 2a, 2b sur la canne, de telle manière que leurs logements 20a, 20b soient tournés l'un vers l'autre ; on les positionne à peu près à l'endroit souhaité ; ensuite on monte les plaquettes 3a, 3b sur chacun des manchons en les faisant coulisser longitudinalement ; cette mise en place se fait en direction de l'extrémité qui est munie du logement 20, de sorte que la translation de la plaquette provoque un léger resserrement du manchon sur la canne, en raison de l'inclinaison d'angle u des rainures 23, les deux bords 24 de la fente étant rapprochés l'un de l'autre. La mise en place se fait en choisissant naturellement les rainures 23 de chaque série qui sont les mieux adaptées pour obtenir un minimum de jeux, sans chercher à ce stade à obtenir un serrage. On introduit ensuite le pied du moulinet sous les deux manchons de manière à ce que les branches A et B pénètrent dans les logements 20a, respectivement 20b. Ensuite on positionne le moulinet à l'endroit exact souhaité et on rapproche fortement les deux manchons vers le pied P jusqu'à obtenir un serrage parfait par effet de coin, les parties coniques A , B mettant sous tension les manchons souples 2a, 2b. La simple comparaison des figures 5 et 6 permet de comprendre que le dispositif est adaptable sur des cannes C1, C2, de diamètres différents.

Pour démonter l'assemblage il suffit d'opérer de manière inverse.

Comme on le voit à la figure 2, l'ensemble des deux dispositifs 1a, 1b recouvre toute la zone de la canne où se trouve le moulinet ; la souplesse des éléments 2, la présence des rainures 23, et le fait que les plaquettes 3 se raccordent sans solution de continuité à ces manchons, font que la prise en main de l'ensemble est particulièrement confortable et agréable pour le pêcheur.

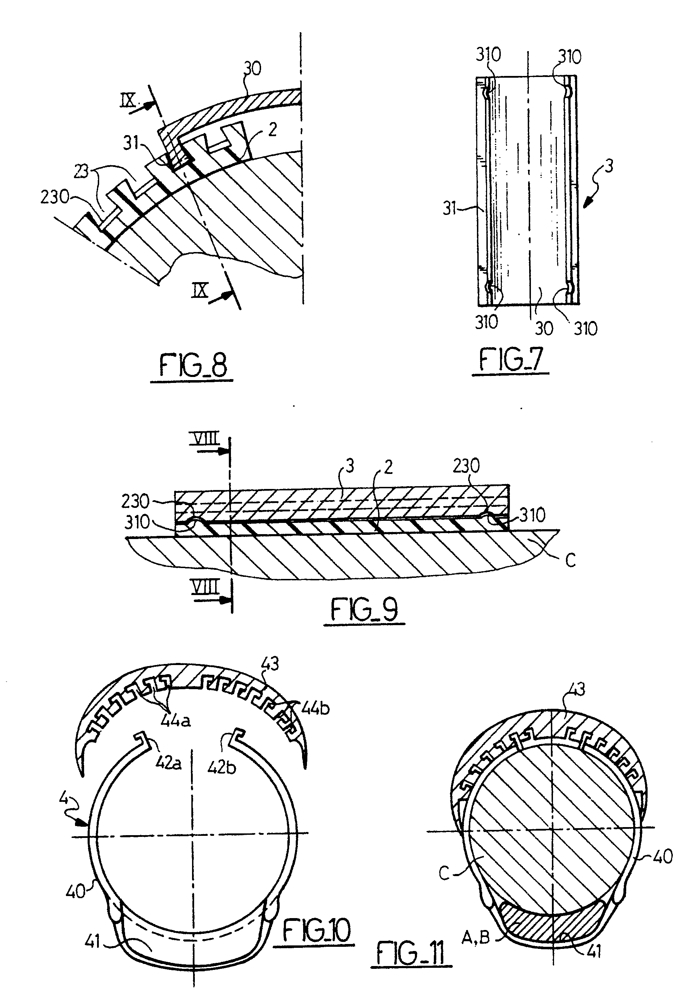

De préférence, comme on le voit à la figure 8, les rainures 23 et les nervures 31 ont des formes en contre-dépouille, par exemple en queue d'aronde, ce qui empêche une désolidarisation intempestive de la plaquette par rapport au manchon, quand le dispositif se trouve à l'état non serre.

On notera également qu'il est prévu aux deux extrémités des bords 31 formant nervures de petites encoches 310 ; celles-ci sont destinées à coopérer avec des bossages complémentaires 230 prévus au fond des rainures 23, de manière à réaliser l'arrêt en fin de course, par encliquetage, de la plaquette sur le manchon.

Le manchon 2 est de préférence réalisé par moulage par injection, tandis que la plaquette 3 peut être réalisée par tronçonnage d'un profilé métallique.

Pour couvrir les diamètres de 20 à 36 mm, il peut être prévu avantageusement quatre modèles de dispositif, de dimensions différentes, convenant respectivement pour les plages de 20 à 24 mm, de 24 à 28 mm, de 28 à 32 mm, de 32 à 36 mm. Ainsi, les problèmes liés au stockage d'un très grand nombre de modèles est évité.

Le dispositif 4 représenté aux figures 10 et 11 est de même conception générale que celui qui vient d'être décrit. Il comprend un manchon fendu 40 réalisé en matière plastique souple les bords de la fente 42a, 42b forment des languettes, ou nervures, en forme de " L ". Comme c'était le cas des rainures dans le mode de réalisation précédent, ces languettes sont légèrement inclinées d'un angle de l'ordre de 1 à 3° par rapport à la direction longitudinale du manchon.

A l'une des extrémités du manchon est ménagé un logement 41 de retenue du pied de moulinet.

Au manchon 40 est associée une plaquette 43 ; il s'agit d'une pièce en matière plastique rigide, en forme d'arc de cylindre, dont la face interne est garnie de deux séries de rainures longitudinales 44a et 44b, disposées symétriquement par rapport au plan longitudinal médian de la pièce. Les rainures 44a, 44b ont une section en "L" complémentaire de celle des languettes 42a, 42b.

Le mode de fixation du dispositif sur une canne à pêche se fait de manière similaire à celle du premier mode de réalisation, le choix des rainures 44a, 44b au moment de la mise en place de la plaquette 43 sur le manchon étant réalisé en fonction du diamètre de la canne C à laquelle on a affaire.

Après mise en place, la paire de manchons 40 emprisonne le pied de moulinet, sans que les deux ensembles 40-43 ne gênent la prise en main de la canne.

Outre les avantages déjà cités du dispositif selon l'invention, il convient de noter que celui-ci peut se monter même sur des cannes non prévues à l'origine pour recevoir un moulinet. D'autre part, grâce au caractère souple et déformable des manchons fendus, le dispositif peut être monté aussi sur une canne dont l'extrémité possède un manchon protecteur de gros diamètre (qui n'autoriserait pas le passage de bagues lisses traditionnelles).

Bien que l'application privilégiée du dispositif faisant l'objet de l'invention se rapporte à la fixation d'un moulinet sur une canne, il est possible d'envisager la fixation d'autres accessoires, notamment d'anneaux guide-ligne ; dans ce cas les dimensions et configurations des parties constitutives du dispositif, et notamment des logements de retenue de l'accessoire, seront naturellement déterminées pour s'adapter à ce type d'accessoire.

## Revendications

1. Dispositif pour fixer, de manière ajustable, un accessoire tel qu'un moulinet sur une canne à pêche, cet accessoire possèdant un pied de fixation (P) ayant la forme générale d'un "T", du type comprenant une paire de manchons (2 ; 40) enveloppant partiellement la canne et possèdant chacun un logement (20 ; 41) conformé pour recevoir l'une des deux branches (A, B) du pied (P) en forme de "T", caractérisé en ce que les manchons (2 ; 40) sont des manchons souples et fendus, et qu'à chaque manchon (2 ; 40) sont associés des moyens serreurs adaptés pour mettre sous tension le manchon de façon à le bloquer par friction, en même temps que l'accessoire, sur la canne, ces moyens serreurs consistant en une plaquette arquée rigide (3 ; 43) apte à relier les deux bords (24 ; 42) du manchon fendu (2 ; 40) en resserrant celui-ci sur la canne.

2. Dispositif selon la revendication 1, caractérisé en ce que ladite plaquette arquée (3, 43) et ledit manchon fendu (2, 40) possèdent des profils d'emboîtement mutuel qui consistent en des séries de rainures sensiblement longitudinales (23, 43) formées dans l'une des pièces, aptes à coopérer sélectivement avec une paire de nervures (31, 42) prévues sur l'autre pièce, la mise en place de la plaquette (3, 43) sur le manchon se faisant par translation en direction axiale.

3. Dispositif selon la revendication 2, caractérisé en ce que lesdites nervures (31) sont constituées par les deux bords latéraux rabattus et parallèles de la plaquette arquée (3), tandis que lesdites rainures sont légèrement inclinées par rapport à la direction axiale, d'un angle (u) de l'ordre de 1 à 3°.

4. Dispositif selon l'une des revendications 2 ou 3, caractérisé en ce que lesdites rainures (23) et nervures (31) ont des profils en contre-dépouille, par exemple en queue d'aronde, aptes à empêcher la désolidarisation inopinée de la plaquette (3) et du manchon (2) à l'état non serré.

5. Dispositif selon l'une des revendications 1 à 4, caractérisé en ce qu'il comporte des moyens d'arrêt (310, 230) en translation de la plaquette (3) sur le manchon (2).

FIG_1

FIG_2

FIG_3

FIG_4

FIG_5

FIG_6

FIG_8

FIG_7

FIG_9

FIG_10

FIG_11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | GB-A-2059732 (ABU (GREAT BRITAIN) LIMITED) <br> * le document en entier * <br> --- | 1 | A01K87/06 <br> F16B2/08 |
| Y | FR-A-1562272 (AVENDANO) <br> * le document en entier * | 1 | |
| A | --- | 2-5 | |
| A | US-A-1566953 (BECKER) <br> * le document en entier * <br> --- | 1-5 | |
| A | FR-A-1351079 (GUILLARD) <br> --- | | |
| A | FR-A-1559036 (DOM HOLDINGS LIMITED) <br> --- | | |
| A | US-A-2749644 (TAGGART) <br> ----- | | |

**DOMAINES TECHNIQUES RECHERCHES (Int. Cl.5 )**

A01K
F16L
F16B

Le présent rapport a été établi pour toutes les revendications

| Lieu de la recherche | Date d'achèvement de la recherche | Examinateur |
|---|---|---|
| LA HAYE | 26 OCTOBRE 1990 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................
& : membre de la même famille, document correspondant

EPO FORM 1503 03.82 (P0402)